# EUROPÄISCHE PATENTSCHRIFT

(11) **EP 1 522 837 B1**
(45) Veröffentlichungstag und Bekanntmachung des Hinweises auf die Patenterteilung: **18.11.2009**
(21) Anmeldenummer: 04015008.8
(22) Anmeldetag: 25.06.2004
(51) Int. Cl.: G01M 3/20, G01M 3/22

(54) **Verfahren zur Dichtigkeitsprüfung eines druckluftbeaufschlagten Federbeines**
Procedure for testing the tightness of a pressurised suspension strut
Procédé d'essai de l'étanchéité d'une jambe de suspension pressurisée

(30) Priorität: 09.10.2003 DE 10346979
(43) Veröffentlichungstag der Anmeldung: 13.04.2005
(73) Patentinhaber: Dr. Ing. h.c. F. Porsche Aktiengesellschaft, 70435 Stuttgart (DE)
(72) Erfinder: Wiesemann, Stefan, 73732 Esslingen (DE)

(56) Entgegenhaltungen:
- DE-U1- 29 608 465
- GB-A- 1 293 569

## Beschreibung

Die Erfindung bezieht sich auf ein Verfahren zur Dichtigkeitsprüfung eines druckluftbeaufschlagten Federbeines nach dem Oberbegriff des Patentanspruchs 1.

Bei druckluftbeaufschlagten Federbeinen ist es vor einem Einbau in ein Kraftfahrzeug notwendig, eine Prüfung auf Luftdichtigkeit der Anschlussstellen des Rollbalges und sonstiger Teile des Federbeines durchzuführen. Diese Dichtigkeitsprüfung ist erforderlich, damit die Funktion des Federbeines nicht durch einen Luftdruckabfall bei Betrieb des Kraftfahrzeugs nachteilig beeinträchtigt und somit das Fahrverhalten eines Kraftfahrzeugs negativ beeinflusst wird.

In der Praxis wird eine Dichtigkeitsprüfung des Federbeines vorgenommen, indem in das mit Luft befüllte Federbein ein Gasluftgemisch eingeblasen wird und dann bei einer Undichtigkeit dieses austretende Gasgemisch über Massenspektrometer feststellbar ist.

Nachteilig bei dieser Art der Dichtigkeitsprüfung ist, dass die im Federbein vorhandene Luft sogenannte Luftnester bzw. Luftpolster im Federraum bildet, welche ein Eindringen des Gasluftgemisches zu den Verbindungsstellen im Federbein sowie zum Rollbalg verhindert, so dass Bereiche des Federbeines nicht überprüfbar sind. Des Weiteren kommt hinzu, dass bei einem Vorhandensein von Luftpolstern die Durchmischung mit dem Gasluftgemisch zeitlich lange dauert, aber die Dichtigkeitsprüfung in kürzester Zeit durchgeführt werden muss, damit ein Diffundieren durch die elastischen Elemente des Federbeines verhindert und somit das Messergebnis nicht verfälscht wird.

Aufgabe der Erfindung ist es, ein Verfahren zur Dichtigkeitsprüfung von druckluftbeaufschlagten Federbeinen zu schaffen, die in einfacher Weise ohne Veränderung am Federbein durchzuführen ist und die Nachteile des bekannten Prüfverfahrens vermieden werden.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, dass eine exakte Dichtigkeitsprüfung durchführbar ist, bei der alle Bereich des Federbeines eingeschlossen sind und eine Behinderung von Luftnestern bzw. Luftpolstern vermieden wird.

Dies wird erreicht, indem die im Federraum der Luftfedern eingeschlossene Luft über eine Überbrückungsfunktion des Restdruckhalteventils vollständig abgesogen wird und dann über das Restdruckhalteventil ein Gasluftgemisch in den Federraum den Luftfeder eingeführt wird und anschließend ein eventuell (bei Leckage) nach außerhalb diffundierendes Gasluftgemisch von Massenspektrometern messbar ist.

Vorteilig bei diesem einfach durchzuführenden Prüfverfahren ist, dass das Federbein über eine Überbrückungsfunktion des Restdruckhalteventils evakuiert werden kann und somit keine zusätzlichen Vorrichtungen zur Evakuierung am Federbein vorgesehen sein müssen.

Diese Dichtigkeitsprüfung wird vzw. in einem dichten Behältnis durchgeführt, in dem das Federbein gehalten ist. In diesem Behältnis sind die sogenannte Massenspektrometer zur Messung eines evtl. aus dem Federbein austretenden Gasluftgemisches angeordnet. Dieses Gasluftgemisch kann aus einem Heliumluftgemisch oder beispielsweise aus Wasserstoff bestehen.

Ein Ausführungsbeispiel der Erfindung ist anhand eines Federbeines und eines und eines Restdruckhalteventils dargestellt und wird im Folgenden näher beschrieben.

Ein druckbeaufschlagtes Federbein1 umfasst im Wesentlichen eine Luftfeder 2 und einen Schwingungsdämpfer 3, wobei ein Rollbalg 4 der Luftfeder 2 einen unter Luftdruck stehenden Federraum 5 nach außen hin begrenzt. Der im Federraum 5 herrschende Luftdruck wird über ein Restdruckhalteventil 6 abgeschlossen, welches eine Funktion zur Herstellung eines Mindestluftdruckes im Federraum 5 hat sicherstellt.

Der mit Luft gefüllte Federraum 5 ist obenseitig über eine mit einem Zylinder 7 des Federbeines 1 befestigten Federbeinkopf 8 verbunden, in dem auch eine Kolbenstange 9 des Schwingungsdämpfers 3 gelagert ist.

Die Luftbefüllung des Federraumes 5 der Luftfeder 2 nach der Fertigung ist erforderlich, damit beim Transportieren des Federbeines 1 keine Beschädigungen z.B. des Rollbalges 4 sowie anderer Teile erfolgen kann.

Zur Dichtigkeitsprüfung des Federraumes 5 in der Luftfeder 2 wird über die Überbrückungsfunktion des Restdruckhalteventils 6 die im Federbein 1 nach der Fertigung eingebrachte Luft bzw. Umgebungsluft abgeführt bzw. abgesogen, so dass der Federraum 5 luftleer bzw. in diesem ein Vakuum herrscht.

Zur Dichtigkeitsprüfung wird der nunmehr luftleere Federraum 5 mittels einer Leitung L, die in das Restdruckhalteventil 6 eingeführt wird, mit einem Gasluftgemisch G, wie beispielsweise einem Helium-Gasluftgemisch oder Wasserstoff gefüllt. Die Messung der Undichtigkeit erfolgt mittels Massenspektrometer M in dem abgeschlossenen Behältnis, in welchem das Federbein von einem Vakuum umgeben ist. Dieses Behältnis B ist in strichpunktierten Linien dargestellt.

Durch die vorherige Evakuierung der Luft aus dem Federraum 5 wird zur Dichtigkeitsprüfung sichergestellt, dass sich keine Luftpolster bzw. Luftnester mehr im Federraum 5 befinden, welche das Gasluftgemisch G abschirmen könnten und hierdurch keine optimale Dichtigkeitsprüfung gewährleistet ist. Die Dichtigkeitsprüfung sollte in ca. 60 Sekunden beendet sein, da nach diesem Zeitraum das Gasluftgemisch durch den Federbalg diffundieren kann und die Dichtigkeitsprüfung verfälscht wird.

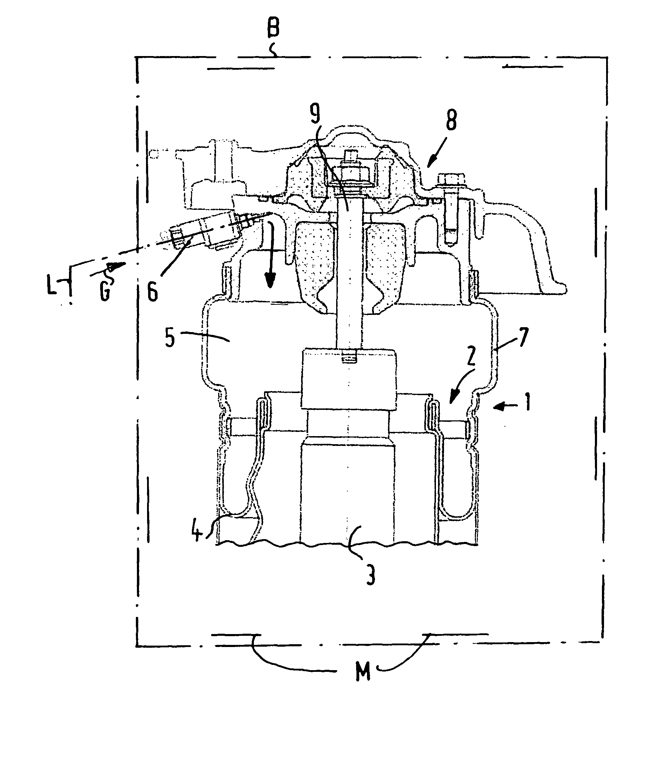

## Patentansprüche

1. Verfahren zur Dichtigkeitsprüfung eines druckluftbeaufschlagten Federbeines, das eine Luftfeder und einen Schwingungsdämpfer umfasst und ein Rollbalg einen unter Druck stehenden Federraum begrenzt und dieser von einem Restdruckhalteventil abgeschlossen ist, **dadurch gekennzeichnet, dass** die im Federraum (5) der Luftfeder (2) eingeschlossene Druckluftmittels einer Überbrückung des Restdruckhalteventils (6) vollständig abgeführt wird und dann über das Restdruckhalteventil (6) zur Dichtigkeitsprüfung ein Gas-Luftgemisch (G) in den Federraum (5) der Luftfeder (2) eingeführt wird und anschließend ein nach außerhalb des Federbeines (1) diffundierendes Gas-Luftgemisch (G) von Massenspektrometern (M) messbar ist.

2. Verfahren nach Anspruch 1, **dadurch gekennzeichnet, dass** das Federbein (1) zur Dichtigkeitsprüfung in einem abgeschlossenen, luftleeren Behältnis (B) gehalten ist und in diesem die Massenspektrometer (M) angeordnet sind.

3. Verfahren nach den Ansprüchen 1 oder 2, **dadurch gekennzeichnet, dass** als Gasluftgemisch (G) ein Helium-Gasluftgemisch oder Wasserstoff verwendet wird.

## Claims

1. Method for testing the leak-tightness of a pressurized spring strut which comprises a pneumatic spring and a vibration damper, a concertina delimiting a pressurized spring space, and the latter being closed off by a residual-pressure holding valve, **characterized in that** the compressed-air medium enclosed in the spring space (5) of the pneumatic spring (2) is discharged completely to a bridging of the residual-pressure holding valve (6), and then a gas/air mixture (G) is introduced into the spring space (5) of the pneumatic spring (2) via the residual-pressure holding valve (6) in order to test leak-tightness, and subsequently a gas/air mixture (G) diffusing outside the spring strut (1) can be measured by mass spectrometers (M).

2. Method according to Claim 1, **characterized in that** the spring strut (1) is held for the testing of leak-tightness in a closed-off air-voided container (B), and the mass spectrometers (M) are arranged in the latter.

3. Method according to either one of Claims 1 and 2, **characterized in that** the gas/air mixture (G) used is a helium-gas/air mixture or hydrogen.

## Revendications

1. Procédé pour tester l'étanchéité d'une jambe de suspension sollicitée par de l'air comprimé, qui comprend un ressort pneumatique et un amortisseur de vibrations, et dans lequel un soufflet roulant limite un espace de ressort sous pression et cet espace de ressort est fermé par une soupape de retenue de pression résiduelle, **caractérisé en ce que** l'air comprimé inclus dans l'espace de ressort (5) du ressort pneumatique (2) est évacué complètement au moyen d'un pontage de la soupape de retenue de pression résiduelle (6), puis un mélange de gaz et d'air (G) est introduit dans l'espace de ressort (5) du ressort pneumatique (2) par le biais de la soupape de retenue de pression résiduelle (6) pour tester l'étanchéité, et ensuite un mélange de gaz et d'air (G) diffusant à l'extérieur de la jambe de suspension (1) peut être mesuré par des spectromètres de masse (M).

2. Procédé selon la revendication 1, **caractérisé en ce que** la jambe de suspension (1) est maintenue dans un récipient fermé vide d'air (B) en vue de tester l'étanchéité, et les spectromètres de masse (M) sont disposés dans celui-ci.

3. Procédé selon les revendications 1 ou 2,
**caractérisé en ce que** l'on utilise comme mélange de gaz et d'air (G) un mélange gazeux d'hélium et d'air ou de l'azote.
